# EUROPEAN PATENT APPLICATION

(11) **EP 4 693 707 A1**
(43) Date of publication of application: **11.02.2026**
(21) Application number: 24881189.5
(22) Date of filing: 12.08.2024
(51) Int. Cl.: H01M 50/552, H01M 50/636, H01M 50/147

(54) **POLE COMPONENT, COVER ASSEMBLY, AND BATTERY CELL**

(30) Priority: 23.10.2023 CN 202322846435 U
(71) Applicant: Contemporary Amperex Technology Co., Limited, Ningde, Fujian 352100 (CN)
(72) Inventor: GAN, Yanmei, Ningde, Fujian 352100 (CN)
(74) Representative: Kraus & Lederer PartGmbB
(86) International application number: PCT/CN2024/111424
(87) International publication number: WO 2025/086820

(57) **Abstract**

A pole assembly, a cover assembly and a battery cell, belonging to the technical field of batteries. The pole assembly (101) includes a first pole (1) and a second pole (2). The first pole (1) is formed with an injection hole (11). The second pole (2) is connected to the first pole (1) to block the injection hole (11). The pole assembly (101) is no longer an integral piece, but is divided into a first pole (1) and a second pole (2). The first pole (1) is provided with an injection hole (11), through which electrolyte can be injected into the battery core located in the accommodation cavity enclosed and formed by a case and the cover assembly (100). After the liquid injection is completed, the second pole (2) is connected to the first pole (1), and the injection hole (11) is blocked by the second pole (2). There is no need to provide an additional sealing nail for blocking the injection hole (11), and the step of welding the sealing nail to block the injection hole (11) is omitted. The pole assembly (101) not only has the function of electric conduction, but also has the function of liquid injection through the injection hole (11) of the first pole (1), and has the function of a sealing nail by blocking the injection hole (11) with the second pole (2).

## Description

### CROSS-REFERENCE TO RELATED APPLICATION

The present disclosure is filed based on and claims priority to Chinese Patent Application No. 202322846435.5, titled "POLE ASSEMBLY, COVER ASSEMBLY AND BATTERY CELL" and filed on October 23, 2023, which is incorporated herein by reference in its entirety.

### TECHNICAL FIELD

The present disclosure relates to the technical field of batteries, and more particularly to a pole assembly, a cover assembly and a battery cell.

### BACKGROUND

New energy batteries are increasingly more widely applied in life and industry. For example, new energy vehicles equipped with batteries have been widely used. In addition, batteries are increasingly applied in the fields of energy storage and the like.

In the related art, the pole assembly has a single function.

### SUMMARY

In order to solve the above technical problems, the present disclosure provides a pole assembly, a cover assembly and a battery cell, so that the pole assembly has at least two functions.

The present disclosure is implemented through the following technical solutions.

A first aspect of the embodiments of the present disclosure provides a pole assembly, including:
a first pole formed with an injection hole; and
a second pole connected to the first pole to block the injection hole.

In the embodiment of the present disclosure, the pole assembly not only has the function of electric conduction, but also has the function of liquid injection through the injection hole of the first pole, and has the function of a sealing nail by blocking the injection hole with the second pole. Therefore, the pole assembly of the present disclosure has at least two functions, which allows more abundant functions of the pole assembly and better solves the problem of single function of the pole assembly.

In an embodiment, the second pole has a mounting portion, and the first pole includes:
a substrate, the injection hole being formed in the substrate; and
a protruding ring connected to one side of the substrate, the protruding ring and the substrate enclosing and forming a mounting cavity in communication with the injection hole, the injection hole being located on the side of the protruding ring facing the mounting cavity, the second pole being connected to the protruding ring, and the mounting portion being located in the mounting cavity to block the injection hole.

In the embodiment of the present disclosure, the mounting portion is located in the mounting cavity to block the injection hole. By at least partially sinking the second pole into the mounting cavity, the volumetric energy density of the battery cell can be increased and the difficulty in processing of the injection hole can be reduced.

In an embodiment, the mounting portion is connected to the protruding ring so that the first pole and the second pole are pressed against each other.

In the embodiment of the present disclosure, the first pole and the second pole are pressed against each other, so that the first pole and the second pole are in close contact with each other, which is beneficial for enhancing the current flow capacity between the first pole and the second pole.

In an embodiment, an internal thread is formed on the side of the protruding ring facing the mounting cavity, and an external thread is formed on the mounting portion, and the external thread and the internal thread are threadedly connected so that the first pole and the second pole are pressed against each other; or, the mounting portion and the protruding ring are riveted so that the first pole and the second pole are pressed against each other.

In the embodiment of the present disclosure, the threaded connection is achieved by screwing the internal thread and the external thread together, so that the first pole and the second pole can be pressed and abutted against each other roughly along the axial direction of the injection hole, thereby enhancing the current flow capacity between the first pole and the second pole. Furthermore, the internal thread and the external thread are screwed together, so that the thread teeth of the internal thread and the thread teeth of the external thread are engaged with each other, thereby increasing the contact area between the first pole and the second pole, which is beneficial for enhancing the current flow capacity between the first pole and the second pole. The threaded connection between the first pole and the second pole allows the first pole and the second pole to be assembled without being contaminated by the electrolyte in the injection hole. The first pole and the second pole connected by riveting can still be maintained in a tightly pressed state of being pressed against each other even in a vibration environment.

In an embodiment, the second pole includes:
a pole body, the mounting portion being formed on the pole body; and
a flange connected to the pole body, the flange surrounding the pole body, and the flange being welded to the end of the protruding ring facing away from the substrate.

In the embodiment of the present disclosure, the flange is welded to the end of the protruding ring facing away from the substrate, so that the dimension of the flange along the axial direction of the injection hole is smaller than the dimension of the pole body along the axial direction of the injection hole, which is beneficial for welding the flange and the protruding ring completely by the welding gun from the side of the flange facing away from the protruding ring, thereby improving the current flow capacity between the flange and the protruding ring.

In an embodiment, the mounting portion is fitted against the substrate, and/or the surface of the protruding ring facing the mounting cavity is fitted against the mounting portion.

In the embodiment of the present disclosure, the fitting of the mounting portion against the substrate and/or the protruding ring is beneficial for increasing the contact area between the second pole and the first pole, and improving the current flow capacity between the first pole and the second pole.

In an embodiment, the surface of the second pole facing away from the substrate is flush with the surface of the protruding ring facing away from the substrate.

In the embodiment of the present disclosure, the corresponding surfaces of the second pole and the protruding ring are flush with each other, and the second pole does not protrude from the side of the protruding ring facing away from the substrate, which is beneficial for reducing the overall dimension of the pole assembly along the axial direction of the injection hole and improving the volumetric energy density of the battery cell.

In an embodiment, the axial dimension of the injection hole is smaller than the dimension of the second pole along the axial direction of the injection hole.

In the embodiment of the present disclosure, the axial dimension of the injection hole is relatively small, which can reduce the difficulty of forming the injection hole in the first pole. The second pole has a relatively large dimension along the axial direction of the injection hole, which is beneficial for enhancing the strength of the second pole for blocking the injection hole, reducing the possibility of the second pole being damaged under external influences, and enabling the second pole to block the injection hole more tightly.

In an embodiment, the second pole covers the outside of the injection hole, and along the axial projection of the injection hole, the projection area of the injection hole is located within the projection area of the second pole.

In the embodiment of the present disclosure, the projection area of the injection hole is located within the projection area of the second pole, and the injection hole is completely covered by the second pole, which is beneficial for better blockage of the injection hole by the second pole. The second pole is located outside the injection hole and does not need to be installed in the injection hole. After the injection is completed, sealant can be injected into the injection hole to complete the pre-sealing of the injection hole, and then the second pole is installed to the first pole so that the second pole covers the outside of the injection hole to achieve the blockage of the injection hole. Since the injection hole can be pre-sealed, during the process of installing the second pole to the first pole, the contamination of the second pole by the electrolyte can be reduced.

A second aspect of the embodiments of the present disclosure provides a cover assembly, including:
a main cover having a through hole, the through hole running through the main cover;
any of the aforementioned pole assemblies, the pole assembly passing through the corresponding through hole; and
an insulation assembly arranged between the main cover and the pole assembly to prevent conduction between the main cover and the pole assembly.

In the embodiment of the present disclosure, the pole assembly not only has the function of electric conduction, but also has the function of liquid injection through the injection hole of the first pole, and has the function of a sealing nail by blocking the injection hole with the second pole. Therefore, the pole assembly of the present disclosure has at least two functions, which allows more abundant functions of the pole assembly and better solves the problem of single function of the pole assembly.

A third aspect of the embodiments of the present disclosure provides a battery cell, including:
a shell;
any of the aforementioned cover assemblies, enclosing and forming an accommodation cavity with the shell; and
a battery core located in the accommodation cavity, the battery core having a tab electrically connected with the pole assembly.

In the embodiment of the present disclosure, the pole assembly not only has the function of electric conduction, but also has the function of liquid injection through the injection hole of the first pole, and has the function of a sealing nail by blocking the injection hole with the second pole. Therefore, the pole assembly of the present disclosure has at least two functions, which allows more abundant functions of the pole assembly and better solves the problem of single function of the pole assembly.

### Effects of the utility model:

The pole assembly of the embodiments of the present disclosure is no longer an integral piece, but is divided into two parts, a first pole and a second pole. The first pole is provided with an injection hole, through which electrolyte can be injected into the battery core located in the accommodation cavity enclosed and formed by the case and the cover assembly. After the liquid injection is completed, the second pole is connected to the first pole, and the injection hole is blocked by the second pole. There is no need to provide an additional sealing nail for blocking the injection hole, and the step of welding the sealing nail to block the injection hole is omitted. The pole assembly not only has the function of electric conduction, but also has the function of liquid injection through the injection hole of the first pole, and has the function of a sealing nail by blocking the injection hole with the second pole. Therefore, the pole assembly of the present disclosure has at least two functions, which allows more abundant functions of the pole assembly and better solves the problem of single function of the pole assembly.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:
FIG. 1 is a schematic structural view of a battery cell in accordance with an embodiment of the present disclosure;
FIG. 2 is a schematic structural view of a cover assembly in accordance with an embodiment of the present disclosure, where a second pole shown in the figure includes a flange located outside a mounting cavity;
FIG. 3 is a sectional view taken along A-A in FIG. 2;
FIG. 4 is an exploded view of a cover assembly in accordance with an embodiment of the present disclosure;
FIG. 5 is a sectional view taken along B-B in FIG. 4;
FIG. 6 is a perspective view of a cover assembly in accordance with an embodiment of the present disclosure; and
FIG. 7 is a schematic structural view of a cover assembly in accordance with an embodiment of the present disclosure, where a first surface and a second surface shown in the figure are flush with each other.

### Description of reference numerals

1. first pole; 11. injection hole; 12. substrate; 13. protruding ring; 131. internal thread; 132. second surface; 14. mounting cavity; 2. second pole; 21. mounting portion; 211. external thread; 22. pole body; 23. flange; 24. first surface; 100. cover assembly; 101. pole assembly; 102. main cover; 112. through hole; 103. insulation assembly; 113. first insulation ring; 123. sealing insulation ring; 133. second insulation ring; 200. shell.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art in the present disclosure. The terms used herein are intended only for the purpose of describing specific embodiments and are not intended to limit the present disclosure. The terms "including" and "having" and any variants thereof in the embodiments of the present disclosure are intended to cover non-exclusive inclusion.

In the description of the embodiments of the present disclosure, the technical terms "first", "second", "third", and the like are only used for distinguishing different objects, and cannot be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, unless otherwise explicitly specified and defined, the technical terms such as "mount", "connect", "connection", and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be a direct contact, or a contact through an intermediate layer, or a contact between two objects in contact with each other that have little or no interaction force, or a contact between two objects in contact with each other that have an interaction force.

As part of the creative concept of the present disclosure, before describing the embodiments of the present disclosure, it is necessary to analyze the reasons why the pole assembly of the battery cell has a single function in the related art, and obtain the technical solution of the embodiments of the present disclosure through reasonable analysis.

In the related art, the pole assembly of the battery cell is electrically connected to the tab of the battery core, and the battery core of the battery cell is discharged to the outside through the tab and the pole assembly, and the external power supply can charge the battery core of the battery cell through the pole assembly and the tab. The pole assembly is mainly used for electric conduction and has a relatively simple function.

The injection hole of the battery cell is typically arranged on the main cover. After the liquid injection is completed through the injection hole, a sealing nail is welded to the main cover to block the injection hole. The pole is divided into two parts, one part of which is formed with an injection hole, so that the pole assembly can not only have the function of electric conduction, but also have the function of electrolyte injection through the injection hole arranged on the pole. After the liquid injection is completed, the injection hole is blocked by the other part of the pole. The pole itself has the function of a sealing nail, so that the pole assembly has at least two functions, avoiding the pole assembly having a single function.

The solution of the embodiments of the present disclosure may be applied to, without limitation, a pole assembly, a cover assembly, a battery cell, a battery module, a battery pack, an energy storage device, and an electrical apparatus. By forming an injection hole on the pole of the pole assembly and blocking the injection hole through the pole, the pole assembly can have at least two functions, enriching the functions of the pole assembly and better solving the problem of single function of the pole assembly.

An electrical apparatus is an apparatus that uses electric energy as the energy source to realize corresponding functions by consuming the electric energy. By way of example, the electrical apparatus may be, but is not limited to, a mobile phone, a tablet, a laptop, an electric toy, an electric tool, a battery vehicle, an electric vehicle, a ship, a spacecraft, and the like. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

The electrical apparatus of the embodiments of the present disclosure may include an apparatus body and a power supply device, the power supply device is used to supply power to the apparatus body, and the power supply device may include a battery cell or a battery pack.

The apparatus body refers to the body structure that consumes electric energy to achieve the corresponding function. For example, the electrical apparatus may be a mobile phone, the apparatus body is a part capable of realizing functions such as communication, and power is supplied to the part capable of realizing functions such as communication through a battery cell or a battery pack. For example, the electrical apparatus may be a car, in which the apparatus body is a part for a passenger to sit in and that can travel on the road, and power is supplied to the part for a passenger to sit in and that can travel on the road through a battery cell or a battery pack.

A power supply device refers to a device capable of outputting electric energy. By way of example, electric energy can be output through a battery pack composed of battery cells.

Description is to be made by taking the electrical apparatus in an embodiment of the present application being a vehicle as an example.

The vehicle provided by an embodiment of the present application may be a fuel vehicle, a gas vehicle, or a new-energy vehicle, and the new-energy vehicle may be an all-electric vehicle, a hybrid electric vehicle, an extended range electric vehicle, or the like. A battery pack is provided inside the vehicle, and the battery pack may be arranged at the bottom or head or tail of the vehicle. The battery pack may be used to supply power to the vehicle. For example, the battery pack may be used as an operating power source of the vehicle. The vehicle may further include a controller and a motor. The controller may be used to control the battery pack to supply power to the motor. For example, the battery pack may serve to satisfy the operating power demand when the vehicle is starting, navigating, and traveling.

In some embodiments of the present disclosure, the battery pack may not only be used as the operating power source of the vehicle, but also be used as a driving power source of the vehicle to replace or partially replace fuel or natural gas to provide driving power for the vehicle.

The battery back in the embodiments of the present disclosure includes a battery cell.

By way of example, a plurality of battery cells may be directly combined into a battery pack.

By way of example, a plurality of battery cells may be combined into a battery module, and then a plurality of battery modules may be combined into a battery pack.

There may be a plurality of battery cells, and the plurality of battery cells may be connected in series or in parallel or in series-parallel connection, where the parallel-series connection refers to the case where some of the plurality of battery cells are connected in series and some of them are connected in parallel. The plurality of battery cells may be directly connected together in series, in parallel, or in parallel-series connection into a battery pack. Certainly, first the plurality of battery cells may be connected in series or in parallel or in parallel-series connection into a battery module, and then a plurality of battery modules may be connected in series or in parallel or in parallel-series connection into a battery pack. The battery pack may further include another structure. For example, the battery pack may further include a bus component for electrically connecting the plurality of battery cells to each other.

The battery cell is a unit that can realize mutual transformation between chemical energy and electric energy.

In the embodiments of the present disclosure, the battery cell may be a secondary battery. The secondary battery refers to a battery cell that can be charged to activate the active material and continue to be used after the battery cell is discharged.

In the embodiments of the present disclosure, the battery cell may be a lithium ion battery, a sodium ion battery, a sodium/lithium ion battery, a lithium metal battery, a sodium metal battery, a lithium sulfur battery, a magnesium ion battery, a nickel hydrogen battery, a nickel cadmium battery, a lead storage battery, etc., which is not limited in the embodiments of the present disclosure.

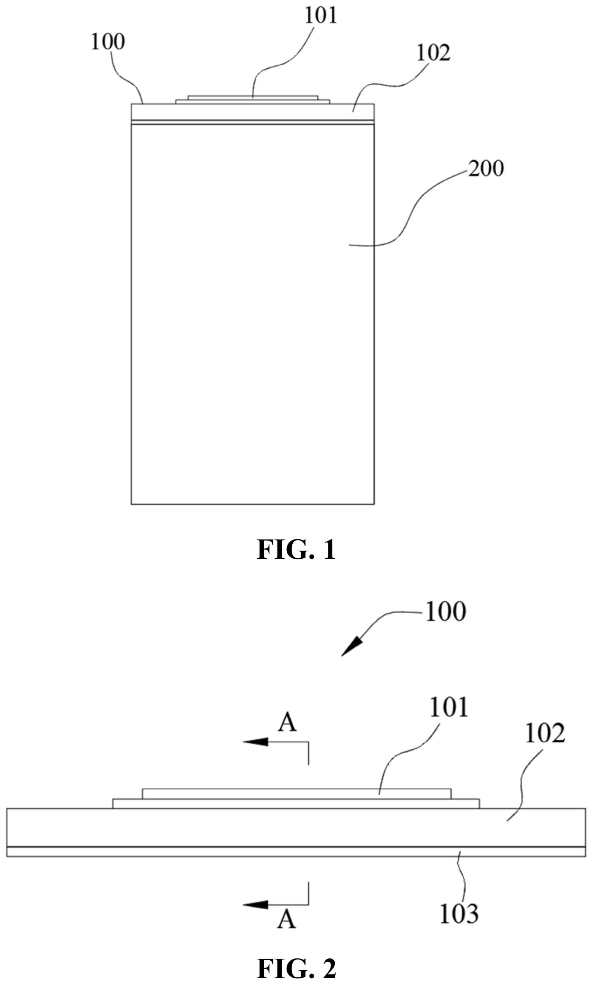

The battery cell of the embodiments of the present disclosure, as shown in FIG. 1, includes a shell 200, a cover assembly 100, and a battery core. The cover assembly 100 and the shell 200 enclose and form an accommodation cavity. A battery core is located in the accommodation cavity.

By way of example, the battery core may be a wound one or a laminated one.

By way of example, the battery core includes a positive electrode plate, a negative electrode plate and a separator, and the separator is arranged between the positive electrode plate and the negative electrode plate.

In the embodiments of the present disclosure, the battery core in the accommodation cavity is protected by the shell 200 and the cover assembly 100.

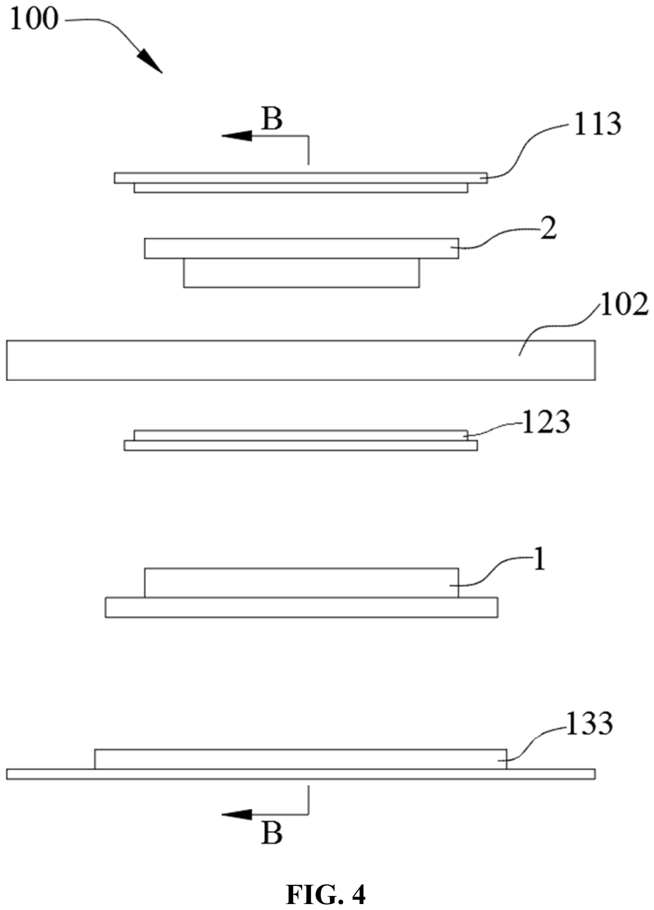

The cover assembly 100 of the embodiments of the present disclosure, referring to FIGS. 2 to 6, includes a main cover 102, a pole assembly 101, and an insulation assembly 103. The main cover 102 has a through hole 112, and the through hole 112 runs through the main cover 102. The pole assembly 101 passes through the corresponding through hole 112. The insulation assembly 103 is arranged between the main cover 102 and the pole assembly 101 to prevent conduction between the main cover 102 and the pole assembly 101.

By way of example, the battery core has a tab, which is electrically connected to the pole assembly 101.

By way of example, the tab may be a positive tab or a negative tab, the positive tab corresponds to the positive electrode plate, and the negative tab corresponds to the negative electrode plate.

By way of example, the polarity of the pole assembly 101 may be positive or negative. The polarity of the pole assembly 101 electrically connected to the positive tab is positive, and the polarity of the pole assembly 101 electrically connected to the negative tab is negative.

By way of example, referring to FIGS. 2 to 6, the insulation assembly 103 includes a first insulation ring 113, a sealing insulation ring 123, and a second insulation ring 133 which are sequentially connected. The first insulation ring 113, the sealing insulation ring 123, and the second insulation ring 133 are located between the main cover 102 and the pole assembly 101. The first insulation ring 113 is located at the end of the sealing insulation ring 123 facing away from the substrate 12 along the axial direction of the injection hole 11, and the second insulation ring 133 is located at the end of the sealing insulation ring 123 facing the substrate 12 along the axial direction of the injection hole 11.

By way of example, the first insulation ring 113 and the second insulation ring 133 are both made of plastic.

In the embodiments of the present disclosure, the battery core can release electric energy to the outside through the tab and the corresponding pole assembly 101, and the external power source can charge the battery core through the pole assembly 101 and the tab.

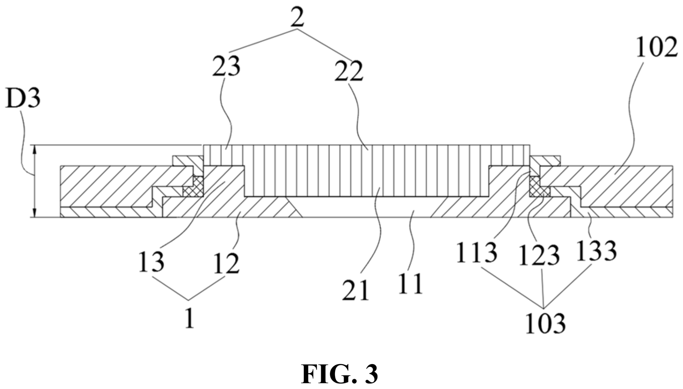

The pole assembly 101 of the embodiments of the present disclosure is shown in FIGS. 3 to 5. The pole assembly 101 includes a first pole 1 and a second pole 2. The first pole 1 is formed with an injection hole 11. The second pole 2 is connected to the first pole 1 to block the injection hole 11.

The injection hole 11 is used for injecting electrolyte into the battery core in the accommodation cavity.

The first pole 1 and the second pole 2 are both capable of electric conduction.

The first pole 1 is connected to the second pole 2, and charged particles can flow from the first pole 1 to the second pole 2 or from the second pole 2 to the first pole 1.

By way of example, the second pole 2 is welded to the first pole 1.

By way of example, the second pole 2 and the first pole 1 may be connected to each other through detachable or non-detachable connection means other than welding.

By way of example, the second pole 2 and the first pole 1 may be combined with each other through a variety of connection means.

In the embodiments of the present disclosure, the pole assembly 101 is no longer an integral piece, but is divided into two parts, a first pole 1 and a second pole 2. The first pole 1 has an injection hole 11, through which electrolyte can be injected into the battery core located in the accommodation cavity enclosed by the case and the cover assembly 100. After the liquid injection is completed, the second pole 2 is connected to the first pole 1, and the injection hole 11 is blocked by the second pole 2. There is no need to provide an additional sealing nail for blocking the injection hole 11, and the step of welding the sealing nail to block the injection hole 11 is omitted. The pole assembly 101 not only has the function of electric conduction, but also has the function of liquid injection through the injection hole 11 of the first pole 1, and has the function of a sealing nail by blocking the injection hole 11 with the second pole 2. Therefore, the pole assembly 101 of the present disclosure has at least two functions, which allows more abundant functions of the pole assembly 101 and better solves the problem of single function of the pole assembly 101.

In an embodiment, referring to FIG. 3, the second pole 2 covers the outside of the injection hole 11, and along the axial projection of the injection hole 11, the projection area of the injection hole 11 is located within the projection area of the second pole 2.

In the embodiments of the present disclosure, the projection area of the injection hole 11 is located within the projection area of the second pole 2, and the injection hole 11 is completely covered by the second pole 2, which is beneficial for better blockage of the injection hole 11 by the second pole 2. The second pole 2 is located outside the injection hole 11 and does not need to be installed in the injection hole 2. After the liquid injection is completed, sealant can be injected into the injection hole 11 to complete the pre-sealing of the injection hole 11, and then the second pole 2 is installed to the first pole 1 so that the second pole 2 covers the outside of the injection hole 11 to achieve the blockage of the injection hole 11. Since the injection hole 11 can be pre-sealed, during the process of installing the second pole 2 to the first pole 1, the contamination of the second pole 2 by the electrolyte can be reduced.

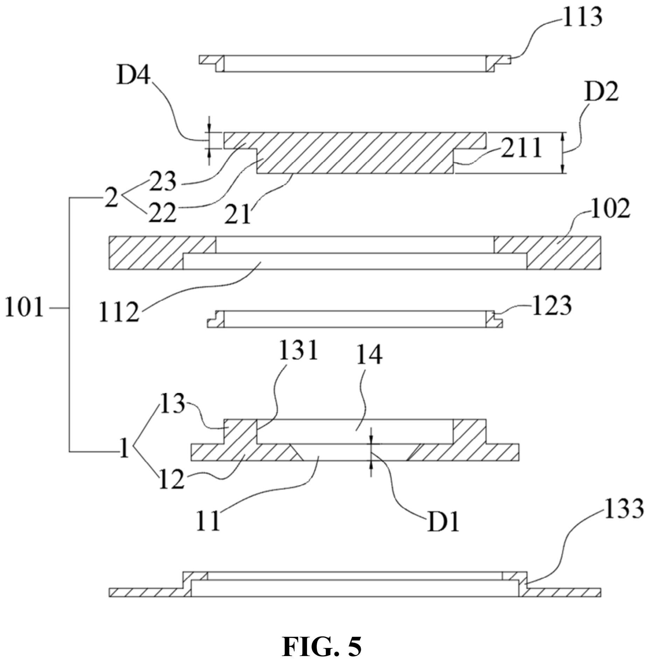

In an embodiment, referring to FIGS. 3 and 5, the axial dimension of the injection hole 11 is smaller than the dimension of the second pole 2 along the axial direction of the injection hole 11.

By way of example, referring to FIG. 5, the axial dimension of the injection hole 11 is D1, the dimension of the second pole 2 along the axial direction of the injection hole 11 is D2, and D1<D2.

By way of example, before the second pole 2 is installed to the first pole 1, the axial dimension of the injection hole 11 can be measured by a tape measure or a vernier caliper.

By way of example, before the second pole 2 is installed to the first pole 1, the dimension of the second pole 2 along the axial direction of the injection hole 11 can be measured by a tape measure or a vernier caliper.

In the embodiments of the present disclosure, the axial dimension of the injection hole 11 is relatively small, which can reduce the difficulty of forming the injection hole 11 in the first pole 1. The second pole 2 has a relatively large dimension along the axial direction of the injection hole 11, which is beneficial for enhancing the strength of the second pole 2 for blocking the injection hole 11, reducing the possibility of the second pole 2 being damaged under external influences, and enabling the second pole 2 to block the injection hole 11 more tightly.

In an embodiment, referring to FIGS. 3 and 5, the second pole 2 has a mounting portion 21. The first pole 1 includes a substrate 12 and a protruding ring 13. The injection hole 11 is formed in the substrate 12. The protruding ring 13 is connected to one side of the substrate 12. The protruding ring 13 and the substrate 12 enclose and form a mounting cavity 14. The mounting cavity 14 is in communication with the injection hole 11. The injection hole 11 is located on the side of the protruding ring 13 facing the mounting cavity 14. The second pole 2 is connected to the protruding ring 13. A mounting portion 21 is located in the mounting cavity 14 to block the injection hole 11.

The protruding ring 13 is an annular structure protruding from one side of the substrate 12.

The mounting cavity 14 is a space for accommodating the mounting portion 21.

By way of example, referring to FIGS. 3 and 5, the thickness of the substrate 12 is smaller than the dimension of the second pole 2 along the axial direction of the injection hole 11. The injection hole 11 is formed in the substrate 12, and the axial dimension of the injection hole 11 is substantially equal to the thickness of the substrate 12.

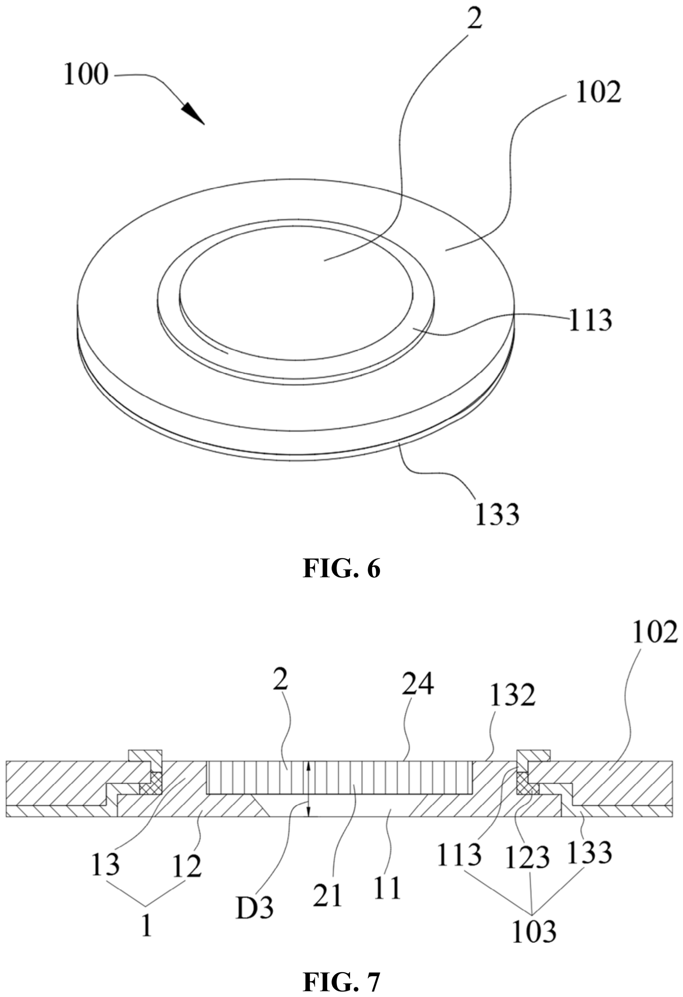

By way of example, referring to FIGS. 3 and 7, the overall dimension of the pole assembly 101 along the axial direction of the injection hole 11 is D3.

By way of example, after the second pole 2 is installed to the first pole 1 to block the injection hole 11, the overall dimension of the pole assembly 101 along the axial direction of the injection hole 11 can be measured by a tape measure or a vernier caliper.

By way of example, the overall dimension of the pole assembly 101 along the axial direction of the injection hole 11 may be less than or equal to 1 mm.

The substrate 12 and the protruding ring 13 are connected, and the charged particles can move from the substrate 12 to the protruding ring 13 or from the protruding ring 13 to the substrate 12.

In the embodiments of the present disclosure, the mounting portion 21 is located in the mounting cavity 14 to block the injection hole 11. By at least partially sinking the second pole 2 into the mounting cavity 14, while meeting the requirement of a larger dimension of the second pole 2 along the axial direction of the injection hole 11, the overall dimension of the pole assembly 11 along the axial direction of the injection hole 101 can be reduced, thereby improving the volumetric energy density of the battery cell. In addition, the mounting portion 21 is located in the mounting cavity 14 to block the injection hole 11. By at least partially sinking the second pole 2 into the mounting cavity 14, the injection hole 11 will not extend to the end of the protruding ring 13 facing away from the substrate 12, which can suppress the axial dimension of the injection hole 11 and reduce the difficulty in processing of the injection hole 11.

In an embodiment, referring to FIG. 3, the mounting portion 21 is connected to the protruding ring 13 so that the first pole 1 and the second pole 2 are pressed against each other.

In the embodiments of the present disclosure, the first pole 1 and the second pole 2 are pressed against each other through the connection between the protruding ring 13 and the mounting portion 21. The first pole 1 and the second pole 2 are pressed against each other, so that the first pole 1 and the second pole 2 are in close contact with each other, which is beneficial for enhancing the current flow capacity between the first pole 1 and the second pole 2.

In an embodiment, referring to FIG. 5, the protruding ring 13 is formed with an internal thread 131 on the side facing the mounting cavity 14, and the mounting portion 21 is formed with an external thread 211, and the external thread 211 and the internal thread 131 are threadedly connected to press the first pole 1 and the second pole 2 against each other.

The internal thread 131 is formed on the side of the protruding ring 13 facing the mounting cavity 14, that is, the internal thread 131 is located on a side cavity wall of the mounting cavity 14.

In the embodiments of the present disclosure, the threaded connection is achieved by screwing the internal thread 131 and the external thread 211 together, so that the first pole 1 and the second pole 2 can be pressed against each other roughly along the axial direction of the injection hole 11, thereby enhancing the current flow capacity between the first pole 1 and the second pole 2. Furthermore, the internal thread 131 and the external thread 211 are screwed together, so that the thread teeth of the internal thread 131 and the thread teeth of the external thread 211 are engaged with each other, thereby increasing the contact area between the first pole 1 and the second pole 2, which is beneficial for enhancing the current flow capacity between the first pole 1 and the second pole 2. The threaded connection between the first pole 1 and the second pole 2 allows the first pole 1 and the second pole 2 to be assembled without being contaminated by the electrolyte in the injection hole 11.

In an embodiment, the mounting portion 21 and the protruding ring 13 are riveted so that the first pole 1 and the second pole 2 are pressed against each other.

In the embodiments of the present disclosure, the connection between the first pole 1 and the second pole 2 is achieved by riveting, so that the first pole 1 and the second pole 2 are pressed against each other. The first pole 1 and the second pole 2 connected by riveting can still be maintained in a tightly pressed state of being pressed against each other even in a vibration environment.

In an embodiment, referring to FIGS. 3 and 5, the second pole 2 includes a pole body 22 and a flange 23. The mounting portion 21 is formed on the pole body 22. The flange 23 is connected to the pole body 22, surrounds the pole body 22, and is welded to the end of the protruding ring 13 facing away from the substrate 12.

The pole body 22 is connected to the flange 23, and charged particles can move from the pole body 22 to the flange 23 or from the flange 23 to the pole body 22.

By way of example, referring to FIG. 5, the dimension of the flange 23 along the axial direction of the injection hole 11 is D4, and the dimension of the pole body 22 along the axial direction of the injection hole 11 is equal to the dimension of the second pole 2 along the axial direction of the injection hole 11, that is, the dimension of the pole body 22 along the axial direction of the injection hole 11 is D2, and D4<D2.

By way of example, before the second pole 2 is installed to the first pole 1, the dimension of the flange 23 along the axial direction of the injection hole 11 can be measured by a tape measure or a vernier caliper.

By way of example, the flange 23 and the protruding ring 13 are welded by laser welding.

In the embodiments of the present disclosure, the flange 23 is welded to the end of the protruding ring 13 facing away from the substrate 12, the mounting portion 21 is located in the mounting cavity 14, the protruding ring 13 protrudes from the substrate 12 and occupies a part of the space, the mounting portion 21 and the protruding ring 13 are in a mutually crossed state, so that the dimension of the flange 23 along the axial direction of the injection hole 11 is smaller than the dimension of the pole body 22 along the axial direction of the injection hole 11, and the smaller dimension of the flange 23 is beneficial for welding the flange 23 and the protruding ring 13 completely by the welding gun from the side of the flange 23 facing away from the protruding ring 13, so that the flange 23 and the protruding ring 13 are welded more firmly, which can improve the current flow capacity of the flange 23 and the protruding ring 13.

In an embodiment, referring to FIG. 3, the mounting portion 21 is fitted against the substrate 12, and/or the surface of the protruding ring 13 facing the mounting cavity 14 is fitted against the mounting portion 21.

In the embodiments of the present disclosure, the fitting of the mounting portion 21 against the substrate 12 and/or the convex ring 13 is beneficial for increasing the contact area between the second pole 2 and the first pole 1 and improving the current flow capacity between the first pole 1 and the second pole 2.

In an embodiment, referring to FIG. 7, the surface of the second pole 2 facing away from the substrate 12 is flush with the surface of the protruding ring 13 facing away from the substrate 12.

By way of example, referring to FIG. 7, the surface of the second pole 2 facing away from the substrate 12 is the first surface 24.

By way of example, referring to FIG. 7, the surface of the protruding ring 13 facing away from the substrate 12 is the second surface 132.

By way of example, referring to FIG. 7, the overall dimension of the pole assembly 101 along the axial direction of the injection hole 11 is D3.

In the embodiments of the present disclosure, the corresponding surfaces of the second pole 2 and the convex ring 13 are flush with each other, and the second pole 2 does not protrude from the side of the convex ring 13 facing away from the substrate 12, which is beneficial for reducing the overall dimension of the pole assembly 101 along the axial direction of the injection hole 11 and improving the volumetric energy density of the battery cell.

The above embodiments are merely intended for illustrating rather than limiting the technical solutions of the present disclosure. Although the present disclosure has been described in detail with reference to the various embodiments above, those of ordinary skill in the art should understand that the technical solutions specified in the various embodiments above may still be modified, or some or all of the technical features therein may be equivalently substituted; and such modifications or substitutions do not cause the essence of the corresponding technical solutions to depart from the scope of the technical solutions of the various embodiments of the present disclosure and shall fall within the scope the present disclosure. In particular, the technical features mentioned in the various embodiments may be combined in any manner as long as there is no structural conflict.

## Claims

1. A pole assembly, comprising:
a first pole formed with an injection hole; and
a second pole connected to the first pole to block the injection hole.

2. The pole assembly according to claim 1, wherein the second pole has a mounting portion, and the first pole comprises:
a substrate, the injection hole being formed in the substrate; and
a protruding ring connected to one side of the substrate, the protruding ring and the substrate enclosing and forming a mounting cavity in communication with the injection hole, the injection hole being located on the side of the protruding ring facing the mounting cavity, the second pole being connected to the protruding ring, and the mounting portion being located in the mounting cavity to block the injection hole.

3. The pole assembly according to claim 2, wherein the mounting portion is connected to the protruding ring so that the first pole and the second pole are pressed against each other.

4. The pole assembly according to claim 3, wherein an internal thread is formed on the side of the protruding ring facing the mounting cavity, and an external thread is formed on the mounting portion, and the external thread and the internal thread are threadedly connected so that the first pole and the second pole are pressed against each other; or, the mounting portion and the protruding ring are riveted so that the first pole and the second pole are pressed against each other.

5. The pole assembly according to any one of claims 2 to 4, wherein the second pole comprises:
a pole body, the mounting portion being formed on the pole body; and
a flange connected to the pole body, the flange surrounding the pole body, and the flange being welded to the end of the protruding ring facing away from the substrate.

6. The pole assembly according to any one of claims 2 to 5, wherein the mounting portion is fitted against the substrate, and/or the surface of the protruding ring facing the mounting cavity is fitted against the mounting portion.

7. The pole assembly according to any one of claims 2 to 6, wherein the surface of the second pole facing away from the substrate is flush with the surface of the protruding ring facing away from the substrate.

8. The pole assembly according to any one of claims 1 to 7, wherein the axial dimension of the injection hole is smaller than the dimension of the second pole along the axial direction of the injection hole.

9. The pole assembly according to any one of claims 1 to 8, wherein the second pole covers the outside of the injection hole, and along an axial projection of the injection hole, a projection area of the injection hole is located within a projection area of the second pole.

10. A cover assembly, comprising:
a main cover having a through hole, the through hole running through the main cover;
a pole assembly according to any one of claims 1 to 9, the pole assembly passing through the corresponding through hole; and
an insulation assembly arranged between the main cover and the pole assembly to prevent conduction between the main cover and the pole assembly.

11. A battery cell, comprising:
a shell;
a cover assembly according to claim 10, enclosing and forming an accommodation cavity with the shell; and
a battery core located in the accommodation cavity, the battery core having a tab electrically connected with the pole assembly.
